# EUROPÄISCHE PATENTANMELDUNG

(11) **EP 1 918 559 A2**
(43) Veröffentlichungstag der Anmeldung: **07.05.2008**
(21) Anmeldenummer: 07020731.1
(22) Anmeldetag: 23.10.2007
(51) Int. Cl.: F02F 11/00

(54) **Zylinderkopfdichtung**

(30) Priorität: 25.10.2006 AT 18092006
(71) Anmelder: GE Jenbacher GmbH & Co. OHG, 6200 Jenbach (AT)
(72) Erfinder: Gruber, Friedrich, 6283 Hippach (AT); Neiteler, Robert, 6020 Innsbruck (DE)
(74) Vertreter: Torggler, Paul Norbert

(57) **Zusammenfassung**

Zylinderkopfdichtung (1) zur Abdichtung einer Zylinderlaufbuchse (2) einer Brennkraftmaschine gegen einen Zylinderkopf (3) der Brennkraftmaschine, wobei die Zylinderkopfdichtung (1) in einem zur Montage an dem dem Zylinderkopf (3) zugewandten Stirnbereich (4) der Zylinderlaufbuchse (2) vorgesehenen Bereich zumindest einen Übertragungsteilbereich (5) zur Übertragung der Anpresskraft zwischen Zylinderkopf (3) und Zylinderlaufbuchse (2) und einen demgegenüber geschwächten Teilbereich (6), in dem im montierten Zustand weniger oder keine Anpresskraft zwischen Zylinderkopf (3) und Zylinderlaufbuchse (2) übertragen wird, aufweist, wobei die Zylinderkopfdichtung (1) so ausgebildet ist, dass sie den gesamten Stirnbereich (4) der Zylinderlaufbuchse (2) gegenüber dem Zylinderkopf (3) abdichtet.

## Beschreibung

Die vorliegende Erfindung betrifft eine Zylinderkopfdichtung zur Abdichtung einer Zylinderlaufbuchse einer Brennkraftmaschine gegen einen Zylinderkopf der Brennkraftmaschine sowie eine Brennkraftmaschine mit einer solchen Zylinderkopfdichtung.

Die beim Stand der Technik bekannte Zylinderkopfdichtung hat zwei Aufgaben. Die eine ist die Abdichtung des innerhalb der Zylinderlaufbuchse liegenden Brennraums gegen die Umgebung. Die andere ist die Übertragung der Anpresskraft vom Zylinderkopf zur Zylinderlaufbuchse bzw. zum Kurbelgehäuse der Brennkraftmaschine. Die Übertragung der Anpresskraft kann beim Stand der Technik nur am äußeren Umfang der Zylinderlaufbuchse bzw. der Dichtung erfolgen, da es sonst zu einem Abscheren des Auflagebundes von der Zylinderlaufbuchse kommen würde. Deshalb gibt es bei allen, beim Stand der Technik bekannten konstruktiven Lösungen eine Freidrehung am inneren Umfang der Zylinderlaufbuchse bzw. der Dichtung. Durch diese Freidrehung entsteht ein Schadraum, in den Fluide aus dem Brennraum eindringen können. Das zum Brennraum hin offene Volumen des Schadraums wird von der Verbrennung des Brennstoff-Luftgemisches im Brennraum jedoch nicht vollständig erfasst. Die Temperaturen im Schadraum sind deutlich niedriger als im Brennraum. Dies hat zur Folge, dass im Schadraum unter anderem unerwünschte Kohlenwasserstoff und Formaldehydemissionen entstehen. Darüber hinaus können korrosiv wirkende Medien in den Schadraum kriechen, wodurch der Zylinderkopfboden so geschädigt werden kann, dass eine Aufarbeitung nicht mehr möglich ist. Dies kann zu so genannten Zylinderdurchbläsern, also Undichtigkeiten des Brennraums am Zylinderkopf führen.

Aufgabe der Erfindung ist es, eine Zylinderkopfdichtung zu schaffen, bei der die genannten Probleme beseitigt sind.

Dies wird erreicht, indem die Zylinderkopfdichtung in einem zur Montage an dem dem Zylinderkopf zugewandten Stirnbereich der Zylinderlaufbuchse vorgesehenen Bereich zumindest einen Übertragungsteilbereich zur Übertragung der Anpresskraft zwischen Zylinderkopf und Zylinderlaufbuchse und einen demgegenüber geschwächten Teilbereich, in dem im montierten Zustand weniger oder keine Anpresskraft zwischen Zylinderkopf und Zylinderlaufbuchse übertragen wird, aufweist, wobei die Zylinderkopfdichtung so ausgebildet ist, dass sie den gesamten Stirnbereich der Zylinderlaufbuchse gegenüber dem Zylinderkopf abdichtet.

Erfindungsgemäß ist somit vorgesehen, den gesamten Stirnbereich der Zylinderlaufbuchse mittels der Zylinderkopfdichtung abzudichten, sodass kein Schadraum, in den korrosive Medien oder andere Fluide aus dem Brennraum eindringen können, vorhanden ist. Um das eingangs genannte Abscheren des Auflageflansches von der restlichen Zylinderlaufbuchse, also von deren am Auflageflansch hängenden Buchsenteil zu verhindern, sieht die Erfindung darüber hinaus vor, dass die Zylinderkopfdichtung einen Übertragungsteilbereich, in dem die Kräfte von dem Zylinderkopf auf die Zylinderlaufbuchse bzw. das Kurbelgehäuse übertragen werden, und einen gezielt geschwächten Teilbereich aufweist. Letzterer gewährleistet zum einen eine Abdichtung und verhindert bzw. reduziert damit das Eindringen von Fluiden oder korrosiven Medien aus dem Brennraum in den Stirnbereich der Zylinderlaufbuchse. Zum anderen gewährleistet die gezielte Schwächung dieses Teilbereichs aber auch, dass keine Anpresskräfte in diesem Bereich der Zylinderkopfdichtung übertragen werden, welche ein Abscheren bzw. Abbrechen des hängenden Buchsenteils vom Auflageflansch bewirken könnten. Durch diese Maßnahmen können die Kohlenwasserstoff- und Formaldehydemissionen der Brennkraftmaschine bei gleichzeitiger Steigerung des Wirkungsgrades gesenkt werden. Darüber hinaus sind Probleme mit korrosiver Beeinträchtigung des Zylinderkopfbodens zumindest deutlich verringert bzw. vollständig vermieden, was wiederum zur Folge hat, dass die Gefahr von Zylinderdurchbläsern verringert ist.

In der nachfolgenden Figurenbeschreibung wird zunächst kurz auf den Stand der Technik und seine Probleme eingegangen. Anschließend werden verschiedene erfindungsgemäße Ausführungsbeispiele einer Zylinderkopfdichtung in ihrer Montagelage dargestellt. Es zeigen:
- Fig. 1: eine schematische Übersichtsdarstellung,
- Fig. 2 und 3: Zylinderkopfdichtungen anhand derer die Probleme des Standes der Technik kurz erläutert werden und
- Fig. 4 bis 8: verschiedene erfindungsgemäße Ausführungsbeispiele.

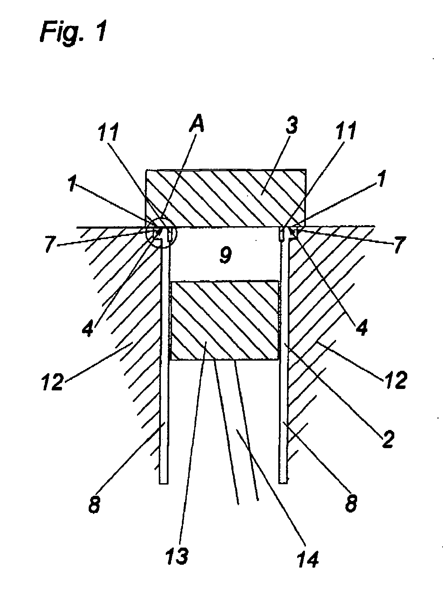

Fig. 1 zeigt zunächst einmal die beim Stand der Technik an sich bekannte Einbausituation, bei der sich die Zylinderlaufbuchse 2 im Kurbelgehäuse 12 mittels des Auflageflansches 7 abstützt. Am Auflageflansch hängt die restliche Zylinderlaufbuches 2. Dieser Teil der Zylinderlaufbuchse 2 wird im Folgenden als hängender Buchsenteil 8 bezeichnet. Im oberen Bereich der Zylinderlaufbuchse 2 kann ein so genannter, beim Stand der Technik bekannter Schabering 11 vorgesehen sein. Dieser auch als Abstreifring, z.B. aus der EP 0 935 061, bekannte, am oberen Ende der Zylinderlaufbuchse 2 eingesetzte Schabering 11 besitzt einen etwas geringeren Innendurchmesser als die Zylinderlaufbuchse 2. Durch den geringeren Innendurchmesser entsteht am oberen Ende der Zylinderlaufbuchse 2 eine Kante. Diese Kante hat die Aufgabe, den Kolben 13 am äußeren Umfang (Feuersteg) von Ablagerungen freizuhalten. Ablagerungen entstehen bei Gasmotoren durch Verbrennung von Öladditiven und Spurenstoffen im Treibgas (zum Beispiel Siloxane). Bei Dieselmotoren handelt es sich meist um Ruß. Die Ablagerungen werden durch den Schabering 11 bei jedem Hub des Kolbens 13 entfernt bzw. abgeschabt. Durch den Schabering 11 wird somit zum einen verhindert, dass Ablagerungen am Kolben an der Innenwand der Zylinderlaufbuchse schaben und zum Büchsenverschleiß führen. Zum anderen wird durch den Schabering 11 aber auch verhindert, dass Ablagerungen am Feuersteg zu einer Senkung des Verbrennungsdrucks auf dem obersten Kolbenring (hier nicht dargestellt) führen, was ein Absenken des Anpressdrucks des obersten Kolbenrings im Laufe der Benutzung der Zylinderlaufbuchse und damit zu einer Erhöhung des Ölverbrauchs führen würde.

Unterhalb des Kolbens 13 ist schematisch das Pleuel 14 gezeigt, mit dem die Bewegung des Kolbens 13 auf eine hier nicht dargestellte aber an sich bekannte Kurbelwelle übertragen wird. Oberhalb des Kolbens 13 befindet sich der Brennraum 9, welcher nach oben hin durch den Zylinderkopf 3 begrenzt ist. Im Zylinderkopf 3 befinden sich in der Regel die Ein- und Auslassventile sowie auch Zündeinrichtungen, wie zum Beispiel Zündkerzen, und dergleichen. Da diese Bauteile nicht erfindungswesentlich sind, sind sie zur Vereinfachung in der gezeigten Darstellung weggelassen worden.

Zwischen Zylinderkopf 3 und der Stirnseite 4 der Zylinderlaufbuchse 2 ist die Zylinderkopfdichtung 1 angeordnet, auf welche in den folgenden Figuren eingegangen wird. In diesen ist jeweils der in Fig. 1 dargestellte Ausschnitt A gezeigt.

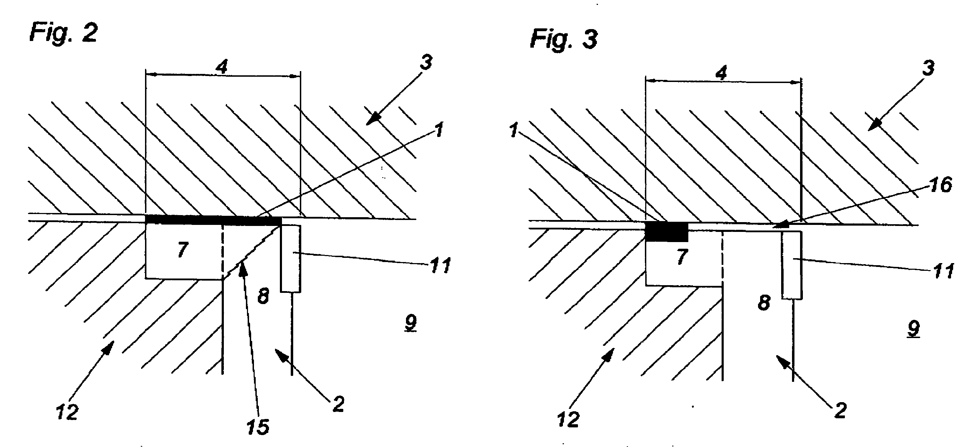

Fig. 2 zeigt schematisch was passiert, wenn eine beim Stand der Technik bekannte Zylinderkopfdichtung 1 sowohl im Bereich des Auflageflansches 7 als auch im hängenden Bereich 8 der Zylinderlaufbuchse 2 angeordnet ist. In diesem Fall werden auch im hängenden Bereich 8 Anpresskräfte vom Zylinderkopf 3 auf die Zylinderlaufbuchse 2 übertragen, was zu einem durch den Riss 15 veranschaulichten Abscheren des hängenden Buchsenteils 8 vom Auflageflansch 7 führen kann. Der Vollständigkeit halber sei angemerkt, dass die gestrichelte Linie zwischen dem Auflageflansch 7 und dem hängenden Buchsenteil 8 in den Fig. 2 bis 4 lediglich der Veranschaulichung dient und keine - wie auch immer geartete - real existierende Trennfläche dargestellt.

Fig. 3 zeigt eine beim Stand der Technik bekannte Lösung, wie das oben genannte Abscheren verhindert werden kann. Hier erstreckt sich die Zylinderkopfdichtung 1 lediglich im Bereich des Auflageflansches 7. Zur Vermeidung der Übertragung von Anpresskräften im Bereich des hängenden Buchsenteils 8 ist beim Stand der Technik eine Freidrehung zwischen Zylinderkopf 3, Zylinderlaufbuchse 2 und Zylinderkopfdichtung 1 vorgesehen, die einen zum Brennraum 9 hin offenen Schadraum 16 bildet, welcher die oben bereits erläuterten Nachteile der Emissionserhöhung und der Zylinderkopfkorrosion hat.

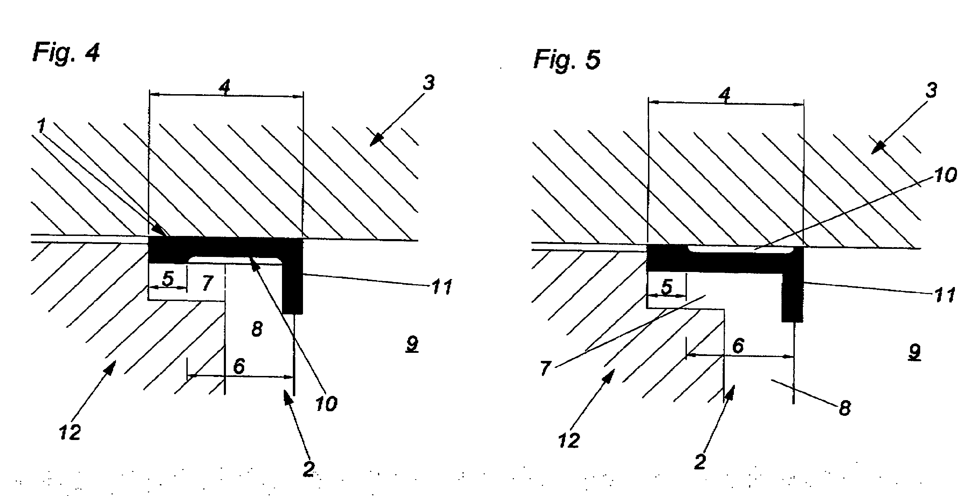

Die Fig. 4 bis 8 zeigen nun Ausführungsbeispiele, bei denen erfindungsgemäß sowohl die Entstehung eines solchen Schadraumes vermieden als auch das unerwünschte Abscheren des hängenden Buchsenteiles 8 verhindert ist. In allen erfindungsgemäßen Ausführungsbeispielen wird die Entstehung eines Schadraumes vermieden, indem sich die Zylinderkopfdichtung 1 über den gesamten Stirnbereich 4 der Zylinderlaufbuchse 2 erstreckt. Zur Vermeidung des Abscherens von Teilen der Zylinderlaufbuchse 2 weist die Zylinderkopfdichtung 1 zumindest zwei Teilbereiche auf. Dies sind der Übertragungsteilbereich 5, der zur Übertragung der Anpresskräfte vom Zylinderkopf 3 auf die Zylinderlaufbuchse 2 und damit auf das Kurbelgehäuse 12 dient. Der zweite Teilbereich ist der so genannte geschwächte Teilbereich 6, bei dem durch eine gezielte konstruktive Schwächung verhindert wird, dass zu hohe Anpresskräfte auf den hängenden Buchsenteil 8 übertragen werden können. Im Ausführungsbeispiel gemäß Fig. 4 ist zur gezielten Schwächung dieses Teilbereiches 6 der Zylinderkopfdichtung 1 zwischen der Zylinderkopfdichtung und der Zylinderlaufbuchse 2 ein Hohlraum 10 vorgesehen. Dieser verhindert einerseits die Übertragung zu großer Anpresskräfte im Teilbereich 6, ist aber andererseits durch den einstückig an die Zylinderkopfdichtung 1 angeformten Schabering gegen den Brennraum in der Art abgedichtet, dass keine oder nur geringe Mengen von Fluiden aus dem Brennraum 9 in ihn eindringen können. Es besteht also weder die Gefahr des Abscherens des hängenden Buchsenteiles 8 noch die der Ausbildung eines Schadraurns, der zu erhöhten Schadstoffemissionen oder zu erhöhter Korrosivität am Zylinderkopf 3 führen könnte. Der Übertragungsteilbereich 5 der Zylinderkopfdichtung ist in allen Ausführungsbeispielen so dimensioniert, dass er in Montagestellung ausschließlich im Bereich des Auflageflansches 7 an der Zylinderlaufbuchse 2 anliegt.

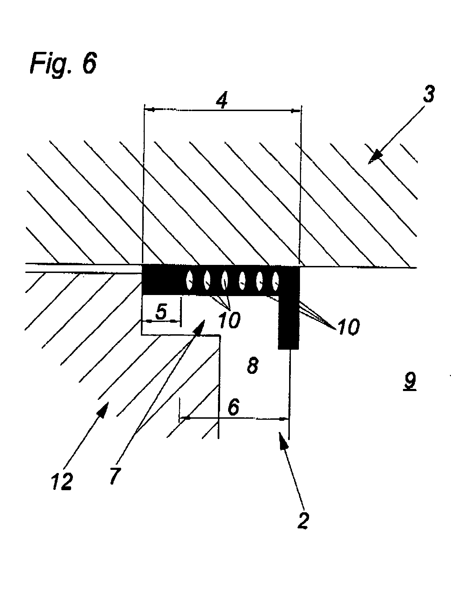

Fig. 5 zeigt ein zweites erfindungsgemäßes Ausführungsbeispiel, bei dem der Hohlraum 10 zwischen dem oberen Ende der Zylinderkopfdichtung 1 und dem Zylinderkopf 3 ausgebildet ist. Auch dieser Hohlraum 10 ist gegen den Brennraum 9 abgedichtet. Fig. 6 zeigt, dass die zur Schwächung des Teilbereichs 6 vorgesehenen Hohlräume 10 auch als abgeschlossene Kavitäten im inneren des geschwächten Teilbereiches 6 der Zylinderkopfdichtung 1 angeordnet sein können. Im gezeigten Ausführungsbeispiel handelt es sich um eine Vielzahl von einzelnen oder in Gruppen in sich geschlossenen Hohlräumen 10. In allen bisher diskutierten erfindungsgemäßen Ausführungsvarianten gemäß der Fig. 4 bis 6 bestehen sowohl der Übertragungsteilbereich 5 als auch der geschwächte Teilbereich 6 aus demselben Matrix-Material. Vorzugsweise kann als Matrix- Material Stahl verwendet werden, wobei unter Matrix-Material der gesamte Feststoffanteil der Zylinderkopfdichtung, also alles Material außerhalb der Hohlräume 10 gemeint ist. Bei diesen Ausführungsvarianten bietet es sich an, dass der Übertragungsteilbereich 5 und der geschwächte Teilbereich 6 als ein zusammenhängendes, vorzugsweise einstückiges Bauteil ausgeführt und/oder als solches montierbar sind. Besonders günstig ist es dabei, wenn zusätzlich noch der Schabering 11 in dieses Bauteil, vorzugsweise einstückig, integriert ist, weil dann günstigerweise der Schabering ebenfalls aus demselben Matrix-Material, also vorzugsweise aus Stahl, besteht. Der Übertragungsteilbereich 5, der geschwächte Teilbereich 6 und der Schabering 11 können dabei günstigerweise in dem Sinne einstückig ausgebildet sein, als dass sie aus einem einzigen einstückigen Rohling aus Matrix-Material, vorzugsweise Stahl, gedreht oder gefräst sind. Es ist aber auch möglich, die beiden Teilbereiche 5 und 6 und den Schabering 11 als ein zwar nicht einstückiges aber zusammenhängendes Bauteil auszuführen und damit als solches montierbar auszugestalten. Als Verbindung zwischen den einzelnen Teilen kommt dann Verkleben, Verschweißen, Verschrauben, kraft- oder formschlüssiges Ineinandergreifen oder dergleichen in Frage.

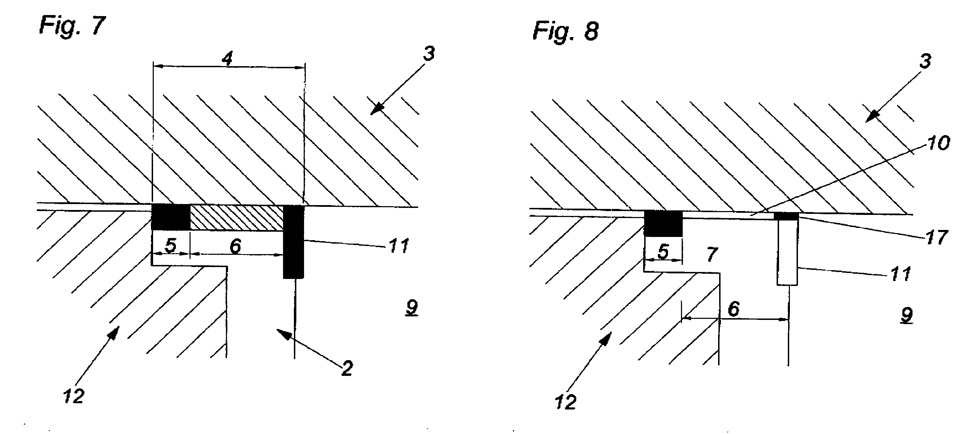

Diese bisher beschriebenen, besonders einfach zu fertigenden, meist einstückig ausgebildeten Varianten sind aber nicht die einzige Möglichkeit die Erfindung auszuführen. So kann, wie in Fig. 7 beispielhaft gezeigt, im Übertragungsteilbereich 5 der Zylinderkopfdichtung 1 auch anderes Matrix-Material vorgesehen sein, als im geschwächten Teilbereich 6. In diesem Fall wird man im Bereich 5 ein hartes Material zur Übertragung der Anpresskräfte wählen, während im geschwächten Teilbereich 6 ein wesentlich weicheres Material gewählt wird, welches keine oder nur geringe Anpresskräfte überträgt. Darüber hinaus ist zu betonen, dass gemäß der Erfindung auch nicht zwingend eine einstückige Verbindung zwischen den Teilbereichen 5 und 6 und dem Schabering 11 vorgesehen sein muss. Diese können auch als voneinander getrennte Bauteile ausgeführt und montierbar sein. Darüber hinaus ist es auch möglich, auf den Schabering 11 zu verzichten; wobei dann über eine entsprechende Dimensionierung der Teilbereiche 5 und 6 dafür gesorgt wird, dass der gesamte Stirnbereich 4 in der Weise ausgefüllt ist, dass kein Schadraum entsteht.

Fig. 8 zeigt eine erfindungsgemäße Ausführungsvariante, bei der der Übertragungsteilbereich 5 der Zylinderkopfdichtung 1 sich lediglich über den äußeren Bereich des Auflageflansches 7 erstreckt. Der geschwächte Teilbereich 6 der Zylinderkopfdichtung 1 wird aus dem Hohlraum 10 und der brennraumseitigen Dichtung 17 gebildet, welche das Eindringen von Fluiden aus dem Brennraum 9 in den Hohlraum 10 vermeidet. Für die Dichtung 17 wird dabei ein Material gewählt, welches deutlich weicher als das Matrix-Material im Übertragungsteilbereich 5 ist, sodass im Bereich des hängenden Buchsenteils 8 keine für das Abscheren des hängenden Buchsenteils kritischen Anpresskräfte übertragen werden können. Der Übertragungsteilbereich 5 und die Dichtung 17 des geschwächten Teilbereiches 6 können vollkommen voneinander getrennte Bauteile sein, aber auch über hier nicht dargestellte Stege oder dergleichen miteinander verbunden sein.

## Patentansprüche

1. Zylinderkopfdichtung zur Abdichtung einer Zylinderlaufbuchse einer Brennkraftmaschine gegen einen Zylinderkopf der Brennkraftmaschine, **dadurch gekennzeichnet, dass** die Zylinderkopfdichtung (1) in einem zur Montage an dem dem Zylinderkopf (3) zugewandten Stirnbereich (4) der Zylinderlaufbuchse (2) vorgesehenen Bereich zumindest einen Übertragungsteilbereich (5) zur Übertragung der Anpresskraft zwischen Zylinderkopf (3) und Zylinderlaufbuchse (2) und einen demgegenüber geschwächten Teilbereich (6), in dem im montierten Zustand weniger oder keine Anpresskraft zwischen Zylinderkopf (3) und Zylinderlaufbuchse (2) übertragen wird, aufweist, wobei die Zylinderkopfdichtung (1) so ausgebildet ist, dass sie den gesamten Stirnbereich (4) der Zylinderlaufbuchse (2) gegenüber dem Zylinderkopf (3) abdichtet.

2. Zylinderkopfdichtung nach Anspruch 1 zur Abdichtung einer einen Auflageflansch und einen daran hängenden Buchsenteil aufweisenden Zylinderlaufbuchse (2) gegen den Zylinderkopf (3), **dadurch gekennzeichnet, dass** der Übertragungsteilbereich (5) der Zylinderkopfdichtung (1) so dimensioniert ist, dass er in Montagestellung, vorzugsweise ausschließlich, im Bereich des Auflageflansches (7) an der Zylinderlaufbuchse (2) anliegt.

3. Zylinderkopfdichtung nach Anspruch 1 oder 2, **dadurch gekennzeichnet, dass** im geschwächten Teilbereich (6) der Zylinderkopfdichtung (1) zumindest ein gegenüber einem Brennraum (9) der Zylinderlaufbuchse (2) abgedichteter Hohlraum (10) vorgesehen ist.

4. Zylinderkopfdichtung nach Anspruch 3, **dadurch gekennzeichnet, dass** der Hohlraum (10) zwischen der Zylinderkopfdichtung (1) und der Zylinderlaufbuchse (2) und/oder zwischen der Zylinderkopfdichtung (1) und dem Zylinderkopf (3) angeordnet ist.

5. Zylinderkopfdichtung nach Anspruch 3 oder 4, **dadurch gekennzeichnet, dass** zumindest einer der Hohlräume (10) als abgeschlossene Kavität im inneren des geschwächten Teilbereiches (6) der Zylinderkopfdichtung (1) angeordnet ist.

6. Zylinderkopfdichtung nach einem der Ansprüche 3 bis 5, **dadurch gekennzeichnet, dass** eine Vielzahl von einzelnen oder in Gruppen in sich geschlossenen Hohlräumen (10) im Inneren des geschwächten Teilbereiches (6) der Zylinderkopfdichtung (1) angeordnet ist.

7. Zylinderkopfdichtung nach einem der Ansprüche 1 bis 6, **dadurch gekennzeichnet, dass** sie im Übertragungsteilbereich (5) und im geschwächten Teilbereich (6) dasselbe Matrix-Material, vorzugsweise Stahl, aufweist.

8. Zylinderkopfdichtung nach einem der Ansprüche 1 bis 6, **dadurch gekennzeichnet, dass** sie im Übertragungsteilbereich (5) anderes Matrix-Material aufweist als im geschwächten Teilbereich (6).

9. Zylinderkopfdichtung nach einem der Ansprüche 1 bis 8, **dadurch gekennzeichnet, dass** der Übertragungsteilbereich (5) und der geschwächte Teilbereich (6) als ein zusammenhängendes, vorzugsweise einstückiges, Bauteil ausgeführt und/oder montierbar sind.

10. Zylinderkopfdichtung nach einem der Ansprüche 1 bis 8, **dadurch gekennzeichnet, dass** der Übertragungsteilbereich (5) und der geschwächte Teilbereich (6) als zwei voneinander getrennte Bauteile ausgeführt und/oder montierbar sind.

11. Zylinderkopfdichtung nach einem der Ansprüche 1 bis 9, **dadurch gekennzeichnet, dass** sie einen, vorzugsweise einstückig angeformten, Schabering (11) aufweist.

12. Zylinderkopfdichtung nach Anspruch 11, **dadurch gekennzeichnet, dass** der Übertragungsteilbereich (5) und der geschwächte Teilbereich (6) und der Schabering (11) dasselbe Matrix-Material, vorzugsweise Stahl, aufweisen.

13. Zylinderkopfdichtung nach Anspruch 11 oder 12, **dadurch gekennzeichnet, dass** der Übertragungsteilbereich (5) und der geschwächte Teilbereich (6) und der Schabering (11) als ein zusammenhängendes Bauteil ausgeführt und/oder montierbar.sind.

14. Zylinderkopfdichtung nach einem der Ansprüche 1 bis 13, **dadurch gekennzeichnet, dass** der Übertragungsteilbereich (5) und der geschwächte Teilbereich (6) und der gegebenenfalls vorhandene Schabering (11) aus einem einzigen einstückigen Rohling aus Matrix-Material, vorzugsweise Stahl, gedreht oder gefräst sind.

15. Brennkraftmaschine mit einer Zylinderkopfdichtung nach einem der Ansprüche 1 bis 14.
